# EUROPEAN PATENT APPLICATION

(11) **EP 3 651 130 A1**
(43) Date of publication of application: **13.05.2020**
(21) Application number: 17916811.7
(22) Date of filing: 11.10.2017
(51) Int. Cl.: G07F 11/62

(54) **GOODS INVENTORY METHOD AND SYSTEM**

(30) Priority: 04.07.2017 CN 201710538857
(71) Applicant: Shenzhen Genuine Innovative Technology Co., Ltd, Shenzhen, Guangdong 518000 (CN)
(72) Inventor: LI, Wenhua, Shenzhen, Guangdong 518000 (CN)
(74) Representative: Heimdal, Pär
(86) International application number: PCT/CN2017/105747
(87) International publication number: WO 2019/006902

(57) **Abstract**

A method for counting goods inventory and a system thereof, applied to an automatic vending container, the automatic vending container is provided with N cabinets (10), the method includes: arranging an independent RFID reader (20, 430) in each cabinet (10); at a first start time instant, starting one RFID reader (20, 430) to scan an RFID tag (100); at a second start time instant, starting another RFID reader (20, 430) to scan an RFID tag (200); repeating the operations until an N^{th} start time instant, and starting a last RFID reader (20, 430) to scan an RFID tag (300); wherein the first start time instant to the N^{th} start time instant are all a time instant within an inventory counting time period, and a random time interval is defined between adjacent start time instants. Inventory counting of all the goods is completed by arranging an independent RFID reader (20, 430) in each cabinet (10) based on RFID technology. With the method for counting goods inventory, the RFID reader does not need to be manually moved, and fully automatic operation is practiced. Inventory counting is performed and data is uploaded in a remote control manner.

## Description

### TECHNICAL FIELD

The present application relates to the technical field of RFID, and in particular, relates to a method for counting goods inventory and a system thereof.

### BACKGROUND

Automatic vending containers are machines where automatic payment is completed according to the money taken by the machine. The automatic vending container is advantageous in that the container is not subject to restrictions of time and place, manpower is saved and transaction is convenient and the like, and thus is being more and more widely used.

Each automatic vending container may be considered as an independent cabinet for storing goods. With the advancement of sale, the maintenance personnel will replenish the goods for the automatic vending container or carry out routine maintenance for the automatic vending container.

During the maintenance, the maintenance personnel needs to check or count the inventory of the goods in the automatic vending container, to determine sales of different goods. Sometimes, the to-be-expired goods need to be timely cleared and new goods need to be arranged. Generally, the inventory counting is performed manually by the maintenance personnel for the automatic vending container.

With the extensive application of the RFID technology, to mitigate the workload, the cost and error of the maintenance personnel during the inventory counting, some conventional automatic vending containers support quick inventory counting based on electronic tags.

During the implementation of the present application, the inventors have identified that the related art has the following problem:

Since the automatic vending container is generally divided into a plurality of cabinets or spaces, during use of such radio frequency devices as an RFID reader, some goods may fail to be scanned and acquired due to blocking of the infrared frequency. In this case, the maintenance personnel needs to frequently move the RFID reader to ensure that all the goods are scanned and read. Further, although the RFID technology may improve the speed of the goods inventory counting, manual inventory counting is still needed, and thus manpower consumption is inevitable.

### SUMMARY

The present application provides a method for counting goods inventory and a system thereof, to solve the problem that goods inventory counting is not intelligent and application of RFID technology is limited in the prior art.

In one aspect, embodiments of the present application provide a method for counting goods inventory, applied to an automatic vending container. The automatic vending container is provided with N cabinets. The method includes: arranging an independent RFID reader in each cabinet; at a first start time instant, starting one RFID reader to scan an RFID tag; at a second start time instant, starting another RFID reader to scan an RFID tag; and repeating the operations until an N^{th} start time instant, and starting a last RFID reader to scan an RFID tag; wherein the first start time instant to the N^{th} start time instant are all a time instant within an inventory counting time period, and a random time interval is defined between adjacent start time instants.

Optionally, the first start time instant is a start time instant of the inventory counting time period, and the N^{th} start time instant is an end time instant of the inventory counting time period.

Optionally, the method further includes: dividing the inventory time period into N adjacent predetermined time segments from 1 to N; and enabling a probability that an n^{th} start time instant appears in the N predetermined time segments from 1 to N to obey a Poisson distribution.

Optionally, probabilities that different start time instants appear in the N predetermined time segments from 1 to N obey different Poisson distributions.

Optionally, the method further includes:
determining whether a time interval between adjacent start time instants is greater than a predetermined threshold; and
stopping starting the RFID reader if the time interval is not greater than the predetermined threshold.

In another aspect, embodiments of the present application provide a system for counting goods inventory, applied to an automatic vending container, the automatic vending container is provided with N cabinets; wherein the system includes:
an RFID reader independently arranged in each cabinet;
a controller configured to control start of the RFID reader; and
a memory connected to the controller, the memory storing an executed instruction program; wherein the instruction program, when being executed by the controller, causes the controller to:
at a first start time instant, start one RFID reader to scan an RFID tag;
at a second start time instant, start another RFID reader to scan an RFID tag; and
repeat the operations until an N^{th} start time instant, and start a last RFID reader to scan an RFID tag;
wherein the first start time instant to the N^{th} start time instant are all a time instant within an inventory counting time period, and a random time interval is defined between adjacent start time instants.

Optionally, the first start time instant is a start time instant of the inventory counting time period, and the N^{th} start time instant is an end time instant of the inventory counting time period.

Optionally, the controller is further configured to: divide the inventory time period into N adjacent predetermined time segments from 1 to N; and enable a probability that an n^{th} start time instant appears in the N predetermined time segments from 1 to N to obey a Poisson distribution.

Optionally, probabilities that different start time instants appear in the N predetermined time segments from 1 to N obey different Poisson distributions.

Optionally, the controller is further configured to: determine whether a time interval between adjacent start time instants is greater than a predetermined threshold, and stop starting the RFID reader if the time interval is not greater than the predetermined threshold.

With the method for counting goods inventory and the system thereof according to embodiments of the present application, inventory counting of all the goods is completed by arranging an independent RFID reader in each cabinet based on RFID technology. With the method for counting goods inventory, the RFID reader does not need to be manually moved, and fully automatic operations are practiced. Inventory counting is performed and data is uploaded in a remote control manner. In addition, the RFID reader is further started in a time division multiplexing manner to ensure that the RFID tags are effectively read, to prevent mutual interference between a plurality of RFID readers.

### BRIEF DESCRIPTION OF THE DRAWINGS

For a clearer description of the technical solutions according to the embodiments of the present application, hereinafter brief description is given with reference to the accompanying drawings for illustrating the embodiments. Apparently, the accompanying drawings described hereinafter only illustrate some embodiments of the present application, and other accompanying drawings may also be derived based on these accompanying drawings.
FIG. 1 is a schematic structural diagram of an automatic vending machine according to an embodiment of the present application;
FIG. 2 is a flowchart of a method for counting goods inventory according to an embodiment of the present application;
FIG. 3 is a flowchart of a method for counting goods inventory according to another embodiment of the present application; and
FIG. 4 is a schematic structural diagram illustrating hardware of a system for counting goods inventory according to an embodiment of the present application.

### DETAILED DESCRIPTION

To make the objective, technical solution, and advantages of the present application clearer, the present application is further described with reference to specific embodiments and attached drawings. It should be understood that the specific embodiments described herein are only intended to explain the present application instead of limiting the present application.

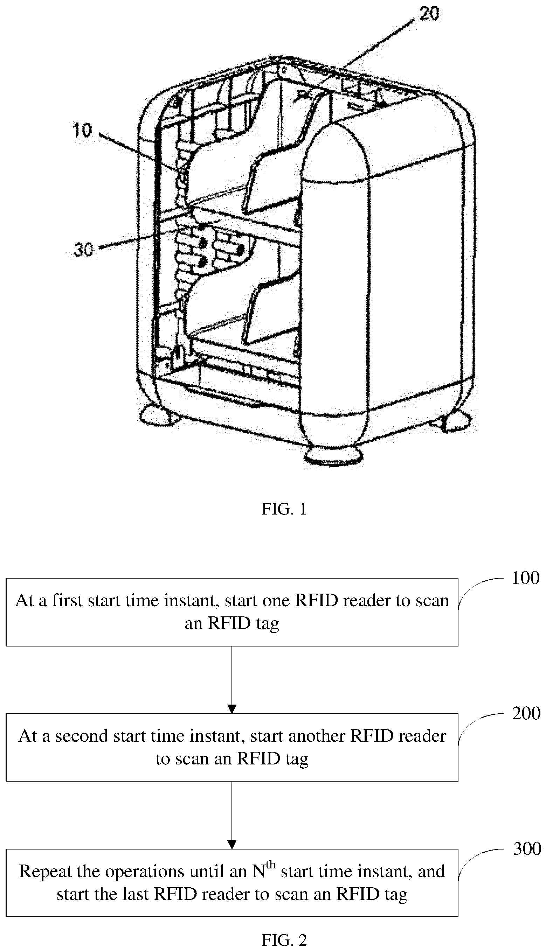

FIG. 1 is a schematic structural diagram of a typical automatic vending container. As illustrated in FIG. 1, the automatic vending container generally has a plurality of cabinets 10. Each of the vending cabinets is provided with different categories of goods. The automatic vending container is internally provided with a controller configured to control operation of the automatic vending container. Each of the cabinets is also provided with an independent RFID reader 20. Goods information in each of the cabinets 30 is read by hierarchical scanning by the RFID reader, thereby ensuring automation and accuracy of goods inventory counting.

Further, to achieve communicative connection with the exterior, the automatic vending container may also be provided with one or a plurality of communication modules, which are connected to an external network or a private network for data exchange.

With the above configuration, after the automatic vending container is divided into different regions according to the cabinets thereof, by using the plurality of RFID readers, the space within the entire vending container may be totally covered. This ensures that electronic tag information in each cabinet is scanned, and ensures accuracy of inventory counting data.

In the case where a plurality of RFID readers are included, if working states of the RFID readers are not controlled according to a specific control rule, the RFID reader may inevitably be subject to severe mutual interference since the interval space between adjacent cabinets is very small. As a result, goods inventory counting may not be performed. In the present application, a specific control manner is used to ensure that goods inventory counting is performed with a high efficiency within a shorter time period.

FIG. 2 illustrates a method for counting goods inventory according to an embodiment of the present application. In this embodiment, goods inventory counting is practiced by using the RFID technology. Each goods placed in the automatic vending container is provided with an electronic tag. The RFID reader scans and reads the electronic tag within the coverage range, and determines the corresponding goods according to information of the electronic tag, thereby performing an inventory counting operation for the goods.

As illustrated in FIG. 2, the method includes the following steps:

100: At a first start time instant, one RFID reader is started to scan an RFID tag.

The start time instant may be any time instant. At this time instant, the controller may generate an interruption signal or a specific level signal to enable the RFID reader to start working to scan the RFID tag. In some embodiments, the first start time instant may be triggered by a remote or local user instruction. In some embodiments, the first start time instant may also be triggered by a predetermined event, for example, an inventory counting date or sold-out information of a piece of goods in a month.

The specifically started RFID reader may also be the RFID reader in any cabinet, which may be specifically determined according to some predetermined rules or standards.

200: At a second start time instant, another RFID reader is started to scan an RFID tag.

300: The operations are repeated until an N^{th} start time instant, and a last RFID reader is started to scan an RFID tag.

After the first start time instant, the entire goods inventory counting process starts. According to the number of actual cabinets, a corresponding number of start time instants need to be determined, and the RFID readers are started to scan to acquire information of the electronic tags.

The first start time instant to the N^{th} start time instant are all a time instant within an inventory counting time period, and a random time interval is defined between two start time instants.

The inventory counting time period refers to the time elapsed when goods inventory counting of the automatic vending container is completed once, and the time is specifically determined by the number of cabinets of the automatic vending container. Generally, the inventory counting time period may be 30s or even shorter.

Generally, during scanning of the goods by using a plurality of RFID readers, if the plurality of RFID readers are simultaneously started for scanning, some interference may be caused therebetween. As a result, some RFID tags are repeatedly read or subject to collisions, and thus fail to be identified or are shielded. Consequently, errors and negligence may be caused.

Therefore, in this embodiment, each RFID reader is started at a random time instant in the inventory counting time period, and a specific time interval is defined between adjacent RFID readers. By using time division multiplexing, the RFID readers are prevented from being simultaneously activated, and it is ensured that the electronic tags are accurately read.

In addition, no unique corresponding relationship is present between each start time instant and the RFID reader. During the process of each goods inventory counting, the RFID readers may be started in difference sequences, and the start time instants are randomly distributed. In this way, each scanning features strong randomness, and is not performed in a fixed manner. Therefore, after multiple goods inventory counting operations, an acquired result is highly reliable, and no error accumulation is caused. In this way, the errors occur in each goods inventory counting operation is eliminated as much as possible.

In some embodiments, the start time and end time of the above inventory counting time period may be respectively the first start time instant and the last start time instant. That is, the inventory counting time period starts from the first start time instant and ends at the last start time instant (the N^{th} start time instant). The time length of the inventory counting time period may be defined according to the actual needs.

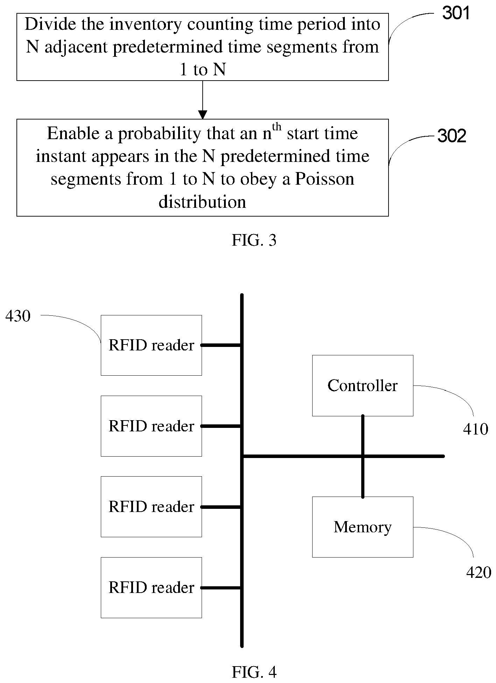

FIG. 3 illustrates a method for counting goods inventory according to another embodiment of the present application. In this embodiment, in addition to the steps as illustrated in FIG. 2, the method further includes:

301: The inventory time period is divided into N adjacent predetermined time segments from 1 to N. The predetermined time segment is a time segment having a standard duration. The specific time length of the predetermined time segment may be determined according to the number of desired predetermined time segments and the inventory counting time period. For example, when five start time instants are needed, the inventory counting time period may be averagely divided into five segments.

In some other embodiments, by using other non-average division manners, for example, 1:3:5:7:9, the inventory counting time period is divided into five segments. In this way, the time intervals between the start time instants are more random.

302: A probability that an n^{th} start time instant appears in the N predetermined time segments from 1 to N is enabled to obey the Poisson distribution.

With respect to each start time instant, it is probable this start time instant appears in each predetermined time segment. The probabilities that the start time instant appears in the various time segments obey the Poisson distribution. For example, with respect to a third start time instant, an average probability that the third start time instant appears in the third predetermined time segment is the highest, and the average probability that the third time instant appears in a predetermined time segment that is far away from the third predetermined time segment is lower.

Based on such probability distribution, in most cases, it is regular that the n^{th} start time instant appears in the n^{th} predetermined time segment. In some occasions, it is also probable that the n^{th} start time instant does not appear in the n^{th} predetermined time segment, which ensures that the control method features some randomness.

In the above control method, start of each RFID reader has a standard mode with high probability, and meanwhile has an abrupt probability variation. In this way, check performance during the process of goods inventory counting is better improved, and reliability of inventory counting data is ensured.

Firstly, the standard mode with high probability may ensure standardized operations during multiple goods inventory counting operations, and ensure that the control method has good stability. Secondly, some abrupt variations may occur, and may be used as a supplementation of the standard mode. In this way, the problem in the common control mode may be checked.

A cloud end or a control system at the background may send a control instruction, perform multiple goods inventory counting operations, and acquire and compare the data. Since the RFID reader has a defined control mode, if consistency of the goods data is still maintained during the multiple goods inventory counting processes, the probability of errors of the goods that are not inventory counted is very low.

In some other embodiments, to further ensure that the probability of the start time instant in the predetermined time segment has more variations, more possibilities and randomness, the probabilities that different start time instants appear in the N predetermined time segments from 1 to N obey different Poisson distributions.

For example, the Poisson distribution probability obeyed by the first start time instant has a steeper curve, and the Poisson distribution probability obeyed by the second start time instant has a smooth curve.

In this embodiment, in addition to assignment of sufficient randomness at the start time instant, it also needs to be ensured that the start time instants are not overlapped or too close to each other, so as to prevent mutual interference due to simultaneous or approximately simultaneously start of two RFID readers.

Accordingly, the method may further include an additional judgment step: judging whether a time interval between adjacent start time instants is greater than a predetermined threshold. The RFID reader is started if the time interval is greater than the predetermined threshold. Start of the RFID reader is stopped if the time interval is not greater than the predetermined threshold.

It should be noted that if start of the RFID reader is stopped at a start time instant, after the inventory counting time period ends, extra start time instants may be continuously generated at an interval of a random time, which ensures that all the RFID readers are started and goods inventory counting is performed for all the cabinets of the automatic vending container.

In a practical goods inventory counting process, based on the above control rules, it is rare or even impossible that the time interval between adjacent start time instants is small for two times or more in the same goods inventory counting time period.

Therefore, in the embodiment of the present application, the scenario where the RFID reader fails to be started for two times or more is not considered.

In some other embodiments, the above judgment step may be replaced by: prohibiting the adjacent RFID reader started at the adjacent start time instant unless at the last start time instant. For example, after the RFID reader in the first cabinet is started, at a next start time instant, the RFID reader in the second cabinet may not be selected unless at the last start time instant.

In this way, by means of spatial isolation, simultaneous or approximately simultaneous start of two RFID readers is prevented, and thus mutual interference is also prevented.

In practice application, the automatic vending container may transmit data of the goods inventory counting to a control device or a cloud-end system at the background over the Internet or the like by using a communication module, and performs one or multiple different data analysis. In the method for counting goods inventory, a corresponding control instruction may be transmitted over a network to start the RFID reader.

FIG. 4 is a schematic structural diagram illustrating hardware of a system for counting goods inventory corresponding to the above method for counting goods inventory according to an embodiment of the present application. The system for counting goods inventory may be applied to the automatic vending container having a plurality of cabinets as illustrated in FIG. 1.

The hardware thereof includes an RFID reader 430 independently arranged in each cabinet, a controller 410 configured to control start of the RFID reader, and a memory 420 connected to the controller.

The RFID reader 430, the at least one processor 410 and the memory 420 may be connected via a bus or in another manner, and FIG. 4 uses connection via the bus as an example.

The memory 420, as a non-volatile computer readable storage medium, may be configured to store non-volatile software programs, non-volatile computer executable programs and modules, for example, the program instructions/modules corresponding to the goods inventory counting methods according to the embodiments of the present application.

The non-volatile software programs, instructions and modules stored in the memory 420, when being executed, cause the processor 410 to perform various function applications and data processing of a server, that is, performing the methods for counting goods inventory according to the above method embodiments.

The memory 420 may include a program memory area and data memory area, wherein the program memory area may store operation systems and application programs needed by at least function; and the data memory area may store data created according to the usage of the system for counting goods inventory. In addition, the memory 420 may include a high speed random access memory, or include a non-volatile memory, for example, at least one disk storage device, a flash memory device, or another non-volatile solid storage device. In some embodiments, the memory 420 optionally includes memories remotely configured relative to the processor 410. These memories may be connected to an information correlation system, over a network. The above examples include, but not limited to, the Internet, Intranet, local area network, mobile communication network and a combination thereof.

The one or more modules are stored in the memory 420, and when being executed by the at least one processor 410, the one or more modules perform the method for counting goods inventory according to any of the above method embodiments.

The above system for counting goods inventory may perform the method according to the embodiments of the present application, has corresponding function modules for performing the method, and achieves the corresponding beneficial effects. For technical details that are not illustrated in detail in this embodiment, reference may be made to the description of the methods according to the embodiments of the present application.

In the system for counting goods inventory according to the embodiment of the present application, each RFID reader is started at a random time instant in the inventory counting time period, and a specific time interval is defined between adjacent RFID readers. By using time division multiplexing, the RFID readers are prevented from being simultaneously activated, and it is ensured that the electronic tags are accurately read.

In addition, no unique corresponding relationship is present between each start time instant and the RFID reader. During the process of each goods inventory counting, the RFID readers may be started in difference sequences, and the start time instants are randomly distributed. In this way, each scanning features strong randomness, and is not performed in a fixed manner. Therefore, after multiple goods inventory counting operations, an acquired result is highly reliable, and no error accumulation is caused. In this way, the errors occur in each goods inventory counting operation is eliminated as much as possible.

Professional personnel should be further aware that with reference to the embodiments of the present application disclosed herein, various exemplary units and algorithm steps may be implemented in the form of electronic hardware, computer software or a combination thereof. To clearly describe interchangeability between the hardware and software, the above description has generally illustrates the compositions and steps of the various example according to the functions. Whether such functions are implemented in the form of software or hardware depends on the specific application and the design restrictions applied to the entire system. Professional technical personnel may implement the described functions by using different methods for each specific application. However, such implementation shall not be deemed as going beyond the scope of the present application. The computer software program may be stored in a computer readable storage medium, wherein the computer software program, when being executed, may perform the steps and processes according to the above method embodiments. The storage medium may be any medium capable of storing program codes, such as read-only memory (ROM), a random access memory (RAM), a magnetic disk, or a compact disc-read only memory (CD-ROM).

Described above are exemplary embodiments of the present application, but are not intended to limit the scope of the present application. Any equivalent structure or equivalent process variation made based on the specification and drawings of the present application, which is directly or indirectly applied in other related technical fields, fall within the scope of the present application.

## Claims

1. A method for counting goods inventory, applied to an automatic vending container, the automatic vending container being provided with N cabinets; wherein the method comprises:
arranging an independent RFID reader in each cabinet;
at a first start time instant, starting one RFID reader to scan an RFID tag;
at a second start time instant, starting another RFID reader to scan an RFID tag; and
repeating the operations until an N^{th} start time instant, and starting a last RFID reader to scan an RFID tag;
wherein the first start time instant to the N^{th} start time instant are all a time instant within an inventory counting time period, and a random time interval is defined between adjacent start time instants.

2. The method according to claim 1, wherein the first start time instant is a start time instant of the inventory counting time period, and the N^{th} start time instant is an end time instant of the inventory counting time period.

3. The method according to claim 2, further comprising:
dividing the inventory counting time period into N adjacent predetermined time segments from 1 to N; and
enabling a probability that an n^{th} start time instant appears in the N predetermined time segments from 1 to N to obey a Poisson distribution.

4. The method according to claim 3, wherein probabilities that different start time instants appear in the N predetermined time segments from 1 to N obey different Poisson distributions.

5. The method according to claim 3, further comprising:
determining whether a time interval between adjacent start time instants is greater than a predetermined threshold; and
stopping starting the RFID reader if the time interval is not greater than the predetermined threshold.

6. A system for counting goods inventory, applied to an automatic vending container, the automatic vending container being provided with N cabinets; wherein the system comprises:
an RFID reader independently arranged in each cabinet;
a controller configured to control start of the RFID reader; and
a memory connected to the controller, the memory storing an executed instruction program; wherein the instruction program, when being executed by the controller, causes the controller to:
at a first start time instant, start one RFID reader to scan an RFID tag;
at a second start time instant, start another RFID reader to scan an RFID tag; and
repeat the operations until an N^{th} start time instant, and start a last RFID reader to scan an RFID tag;
wherein the first start time instant to the N^{th} start time instant are all a time instant within an inventory counting time period, and a random time interval is defined between adjacent start time instants.

7. The system according to claim 6, wherein the first start time instant is a start time instant of the inventory counting time period, and the N^{th} start time instant is an end time instant of the inventory counting time period.

8. The system according to claim 6, wherein the controller is further configured to:
divide the inventory counting time period into N adjacent predetermined time segments from 1 to N, and enable a probability that an n^{th} start time instant appears in the N predetermined time segments from 1 to N to obey the Poisson distribution.

9. The system according to claim 8, wherein probabilities that different start time instants appear in the N predetermined time segments from 1 to N obey different Poisson distributions.

10. The system according to claim 8, wherein the controller is further configured to:
determine whether a time interval between adjacent start time instants is greater than a predetermined threshold, and stop starting the RFID reader if the time interval is not greater than the predetermined threshold.
